# EUROPEAN PATENT APPLICATION

(11) **EP 3 786 083 A1**
(43) Date of publication of application: **03.03.2021**
(21) Application number: 19780129.3
(22) Date of filing: 04.09.2019
(51) Int. Cl.: B65D 81/20, B65D 51/16, B65D 51/24, B65D 49/08, B65D 53/02, A47J 36/06, F16K 15/02

(54) **STEAM-TIGHT CONTAINER**

(30) Priority: 28.06.2019 KR 20190077613
(71) Applicant: Honest Food, Jeonju-si, Jeollabuk-do 54855 (KR)
(72) Inventor: KIM, Su Seok, Jeonju-si, Jeollabuk-do 54906 (KR)
(74) Representative: Margotti, Herwig Franz
(86) International application number: PCT/KR2019/011363
(87) International publication number: WO 2020/262760

(57) **Abstract**

The present disclosure provides a steam sealing container, including: a container body having a first extension formed to extend outward along a rim of a sidewall thereof and a container accommodation portion formed to extend from the sidewall in a state of being spaced apart from the first extension downward; and a container cap configured to cover an upper portion of the container body to seal an inside of the container body, wherein the container cap includes: a second extension closely adhered to a top surface of the first extension; and a fastening unit formed to have a hook shape extending downward from a bottom end of the second extension, wherein while the container cap is coupled onto the container body, the fastening unit enters an inner space of the container accommodation portion, and the hook shape forming a bottom end of the fastening unit is hooked to a bottom end of the first extension.

## Description

### [Technical Field]

This disclosure relates to a container for sealing steam or the like, which includes a double-sealing cap, and more particularly, to a steam sealing container using an accommodation portion formed in a rim extension of a container cap so that the container cap and the container are more firmly coupled due to a steam pressure generated inside a container body and input into the accommodation portion.

### [Background Art]

In general, food is stored in various bowls or containers. The food storage container generally has a container body giving an accommodation space therein and having an opening, a cap for opening or closing the opening, and a fixing unit for fixing the cap to the body. As the fixing unit provided to the container, a fixing member connected to the cap or the body with a hinge to fix the cap to the body is widely used.

However, if the food storage container has four fixing members at four sides of the container, a user is inconvenient to separate the four fixing members by hand when opening and closing the cap. In addition, when not in use, it is inconvenient to carry and store the food storage container due to a large volume.

Meanwhile, when food in the container is cooked or warmed using steam inside the container, steam should not leak to the outside within a certain temperature range, but there is no suitable container to meet this requirement.
(Patent Literature 1) Korean Patent No. 10-1580161
(Patent Literature 2) Korean Utility Model Registration No. 20-0454719

### [Disclosure]

### [Technical Problem]

The present disclosure is directed to providing a steam sealing container, from which steam does not leak.

The present disclosure is also directed to providing a steam sealing container, which may minimize the volume when the sealing container is stored.

### [Technical Solution]

In one general aspect, there is provided a steam sealing container, comprising: a container body having a first extension formed to extend outward along a rim of a sidewall thereof and a container accommodation portion formed to extend from the sidewall in a state of being spaced apart from the first extension downward; and a container cap configured to cover an upper portion of the container body to seal an inside of the container body, wherein the container cap includes: a second extension closely adhered to a top surface of the first extension; and a fastening unit formed to have a hook shape extending downward from a bottom end of the second extension, wherein while the container cap is coupled onto the container body, the fastening unit enters an inner space of the container accommodation portion, and the hook shape forming a bottom end of the fastening unit is hooked to a bottom end of the first extension.

A middle portion of the second extension, which faces a top end of the first extension of the container body, may be curved upward to have various shapes including a semicircular shape to form an accommodation portion serving as a space in which steam generated inside the container body is accommodated.

A discharge hole may be formed in the container cap, and the steam sealing container may further comprise a check valve configured to open or close the discharge hole.

The container cap may be made of flexible material and further have a handle formed to extend outward at one side of the container cap, and a fitting groove may be formed at the handle so that the check valve is fitted therein,
The check valve may include a coupling portion 310 fitted and fixed in the discharge hole, an opening plate 320 formed at an upper portion of the coupling portion and closely adhered to an upper surface of the discharge hole to seal the discharge hole, and a fitting protrusion 330 formed at an upper portion of the opening plate and fitted into the fitting groove formed at the handle.

The check valve may include a valve body 610 fitted into the discharge hole to close the discharge hole and having a valve space 612 formed therein, a caulk 620 movably accommodated in the valve space, and an elastic member 630 accommodated in the valve space to give an elastic force to the caulk, the valve body may have an inner passage 613 formed to connect the valve space and the inner space of the container body, and an outer passage 614 formed to connect the valve space and the outside of the container cap, and the elastic member may give an elastic force so that the caulk keeps closing the inner passage.

The elastic member may be a compression coil spring.

The check valve may include a valve body 710 fitted into the discharge hole to close the discharge hole and having a valve space 712 formed therein with an open top end and an open bottom end, and a valve cover 720 movably inserted into the open top end of the valve body.

In the steam sealing container, the container cap may be made of flexible material and further include a ring formed at one side of the container cap to fix the container cap folded or rolled in a scroll form.

The cover unit may further include a sealing portion 210 protruding downward from the inner end of the second extension to be closely adhered to the inner surface of the top end of the sidewall of the container body.

### [Advantageous Effects]

In the steam sealing container according to the present disclosure, an accommodation portion is formed in the rim portion of the container cap, and thus the container cap is more tightly coupled to the container body due to the pressure of steam generated inside the container body, so that steam does not leak.

In addition, in the steam sealing container according to the present disclosure, the container body and the container cap are made of silicon material and are folded or rolled in a scroll form, and in this state, the fitting groove formed at the handle is fixed to the fitting protrusion formed on the check valve. Thus, when the sealing container is stored, its volume may be minimized, and in particular, even in a state where the container body and container cap are coupled, the container body and container cap may be stored in a folded or rolled form.

### [Description of Drawings]

FIG. 1 is a perspective view showing a steam sealing container according to an embodiment of the present disclosure.
FIGS. 2 and 3 are exploded perspective views showing the steam sealing container depicted in FIG. 1.
FIG. 4 is a plane view showing the steam sealing container depicted in FIG. 1.
FIGS. 5 and 6 are cross-sectioned views showing the steam sealing container, taken along the line A-A of FIG. 3.
FIG. 7 is a plane view showing a state where a ring is added to the steam sealing container depicted in FIG. 1.
FIG. 8 is a diagram showing a state where the steam sealing container depicted in FIG. 7 is folded in a scroll form.
FIGS. 9a to 9c are diagrams showing a fastening manner of a container body and a container cap of the steam sealing container according to another embodiment of the present disclosure.
FIGS. 10a and 10b are diagrams showing a fastening manner of the container body and the container cap of the steam sealing container according to another embodiment of the present disclosure.
FIGS. 11 and 12 are diagrams showing a check valve of a steam sealing container according to still another embodiment of the present disclosure.
FIGS. 13 and 14 are diagrams showing a check valve of a steam sealing container according to still another embodiment of the present disclosure.

### [Best Mode]

Hereinafter, the configuration and operation of the embodiment of the present disclosure will be described in detail with reference to the figures.

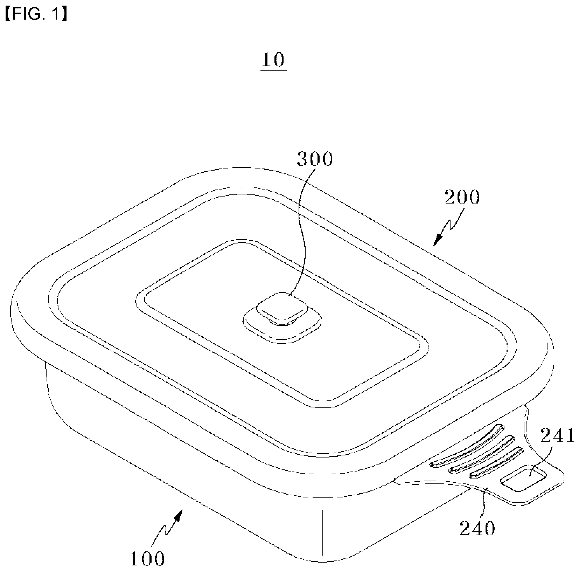

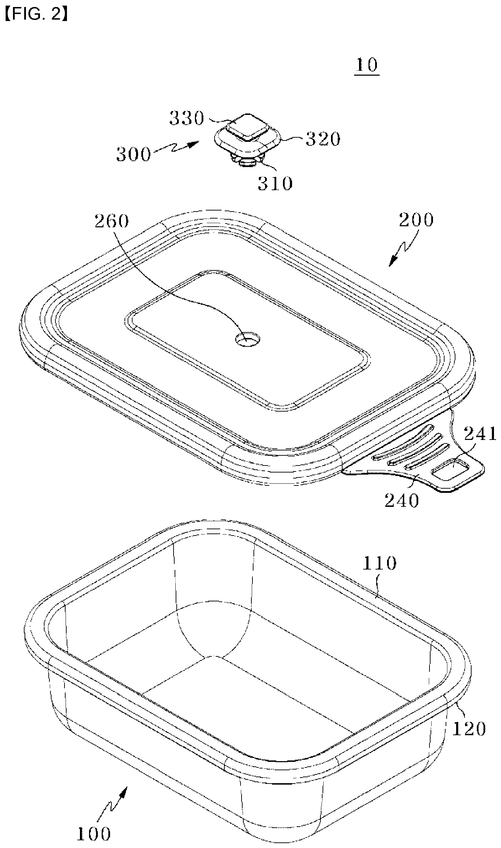

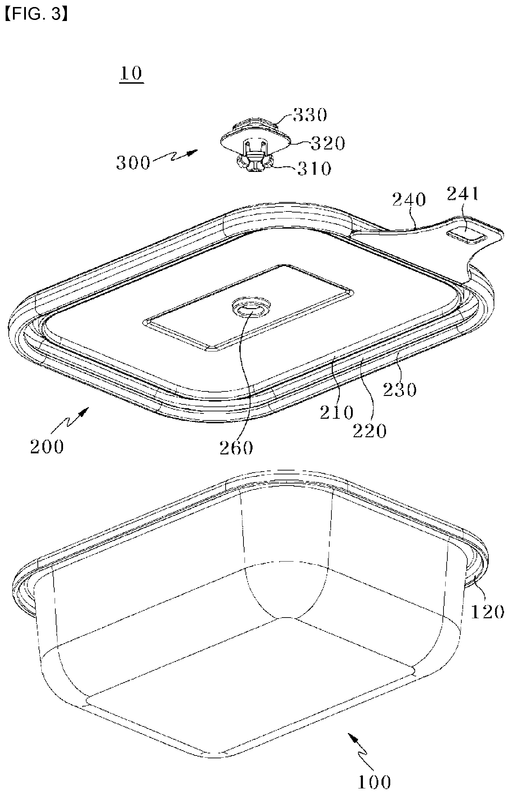

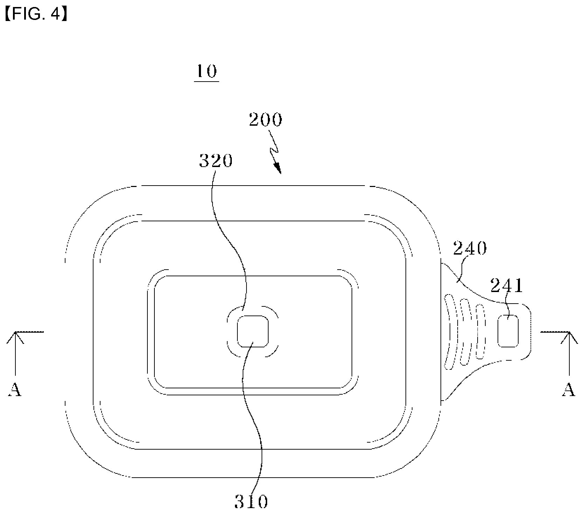

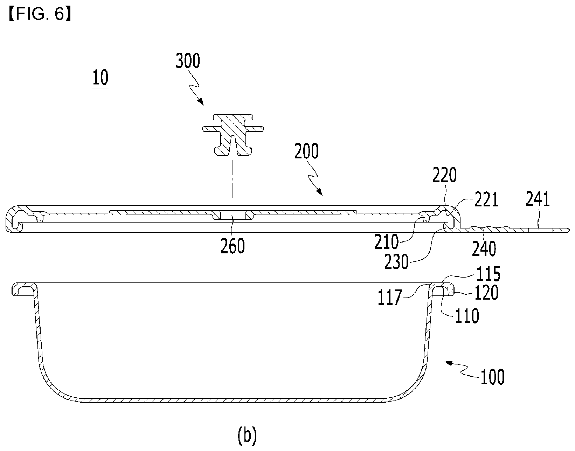

Referring to FIGS. 1 to 8, a steam sealing container 10 according to an embodiment of the present disclosure includes a container body 100, a container cap 200 and a check valve 300.

The container body 100 has a bottom surface and a sidewall formed to protrude upward along a rim of the bottom surface, and provides an inner space in which cooked food or ingredients for cooking food are accommodated. An upper portion of the container body 100 is opened to form an opening.

In addition, the container body 100 includes a first extension 110 formed to primarily extend outward in a horizontal direction along a rim of the sidewall of the container body 100 and a catching protrusion 120 bent downward from an end of the first extension 110 to secondarily extend so that the container cap 200 is fixed thereto. Although it is described in this embodiment that the primary extension is made horizontally outward along the rim, the primary extension may have another shape (e.g., an inclined shape) or a slightly recessed groove shape. It is important that all shapes forming an accommodation space capable of collecting steam fall within the scope of the present disclosure.

The container body 100 and/or the container cap 200 are preferably prepared by injection-molding a material that may be flexibly bent, folded or rolled into a scroll form (e.g., silicone), but the present disclosure is not limited thereto.

The container cap 200 covers the upper opening of the container body 100 to seal the inner space of the container body 100. The container cap 200 includes a cover unit for covering the opening of the container body 100, a sealing portion 210, a second extension 220, a fastening unit 230, a handle 240, a discharge hole 260, and a ring 250 such as an elastic ring.

The structure of the container cap 200 extending from the rim may be variously formed in various shapes such as a semicircular shape in which a middle portion of the second extension 220 facing the horizontally extending portion 115 of the first extension 110 of the container body 100 is curved upward, thereby forming an accommodation portion 221 capable of accommodating the steam generated inside the container body 100.

The accommodation portion 221 is a space formed between the horizontal portion 115, which is the middle portion of the first extension 110 formed at the container body 100, and the second extension 220 of the container cap 200 facing the horizontal portion 115. The accommodation portion may have various shapes, each of which falls within the scope of the present disclosure.

The sealing portion 210 primarily seals the inner space of the container body 100. The sealing portion 210 protrudes downward from an outer end of the cover unit and an inner end of the second extension 220 to be flexibly adhered to the inner surface of the top end of the sidewall of the container body 100. In a state where the container cap 200 is coupled to the container body 100, the sealing portion 210 is closely adhered to the inner surface of the sidewall of the container body 100 to seal the inside of the container body 100. Accordingly, the steam pressure formed in the inner space of the container body 100 is kept constant.

The second extension 220 extends outward from the outer end of the cover unit to form a flange shape on the rim of the container cap 200. The fastening unit 230 is formed at an outer end of the second extension 220 to be hooked while surrounding the catching protrusion 120 of the container body 100. In addition, the middle portion of the second extension 220 is curved upward to form the accommodation portion 221. In other words, the accommodation portion 221 is a space generated when the first extension 110 and the second extension 220 curved into various shapes such as a semicircular shape are combined with each other.

The accommodation portion 221 may have a variety of shapes, such as square, triangular and diamond shapes, and in particular, the accommodation portion 221 preferably has a shape by which steam is collected at the end to pull the cap upward, namely a shape with at least 45 degrees rather than a gentle semicircular shape. The shape of the accommodation portion 221 is one example, and the accommodation portion 221 may be formed in a variety of shapes such as a shape with a wide top area. It is important that the shape is selected to allow the force of the steam pressure collected in the accommodation portion 221 to pull the cap upward and also allow the fastening unit 230 to be more firmly coupled and adhered to the catching protrusion 120 to seal the steam.

If the inside of the container body 100 expands due to gas or steam pressure generated inside the container body 100 by food, the side surface of the container body 100 and the sealing portion 210 may be opened to discharge the steam to the outside. Here, the accommodation portion 221 is formed to accommodate this steam. For example, if the steam is collected at a certain point (a top vertex, or the like) in the accommodation portion 221, the fastening unit 230 provided at the container cap 200 is more tightly adhered and hooked to the catching protrusion 120, and the container cap 200 is pulled upward. By the interaction between the fastening unit 230 and the catching protrusion 120, the container cap 200 is more firmly and closely connected to the container body 100 to prevent the steam of the container body 100 from leaking to the outside.

The fastening unit 230 is formed at a lower portion of the outer end of the second extension 220 and fastened and fixed to surround the catching protrusion 120 formed at the container body 100, thereby secondarily sealing the inner space of the container body 100. If the container body 100 and the container cap 200 expand due to the pressure of steam generated inside the container body 100, the container body 100 is pressurized downward, and the container cap 200 is pressurized upward. At this time, the catching protrusion 120 provided at the container body 100 is pressurized downward to press the fastening unit 230, and the fastening unit 230 provided at the container cap 200 is pressurized upward to be more tightly sealed with the catching protrusion 120.

Meanwhile, the leaked steam is collected in the accommodation portion 221, and the steam collected in the accommodation portion 221 as described above lifts the container cap 200 upward, whereby the fastening unit 230 and the catching protrusion 120 are more tightly coupled to prevent steam leakage.

In addition, the fastening unit 230 is formed to have a hook shape curved inward and may be used for opening or closing the container cap 200. For example, if a user pulls the handle 240 upward in a state where the container cap 200 is fastened and fixed to the container body 100, the fastening unit 230 naturally detaches from the catching protrusion 120 to separate the container cap 200 from the container body 100.

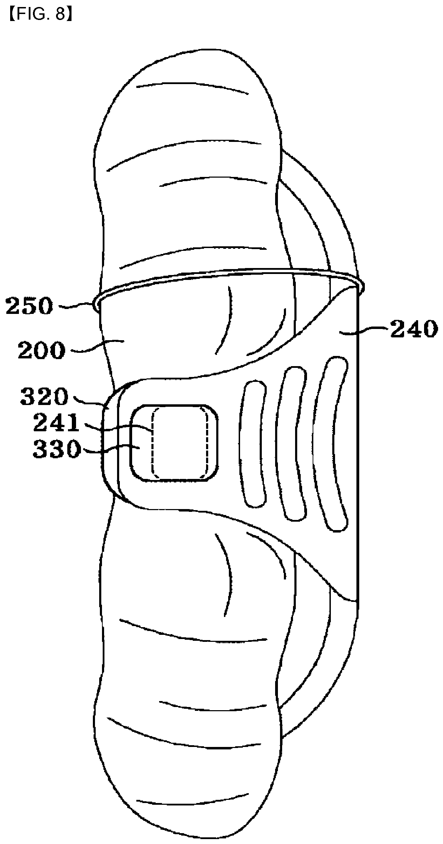

The handle 240 is formed to extend outward from one side of the container cap 200 by a predetermined length and may be provided for the user to easily open the container cap 200. In addition, the handle 240 may have a fitting groove 241 formed in the middle of the outer side thereof in the length direction so that the container cap 200 may be fixed to the check valve 300 in a folded or rolled form. For example, as shown in FIG. 8, in a state where the container cap 200 is rolled into a scroll form from an opposite side where the handle 240 is formed, the fitting groove 241 is hooked and fixed to the fitting protrusion 330 formed at the check valve 300.

If the fitting groove 241 is formed at the handle 240 so that the check valve 300 is fitted therein as described above, when the sealing container 10 made of silicon to be freely curved is stored, its volume may be minimized. In particular, in a state where the container body 100 is coupled to the container cap 200, the container body 100 may be stored in a folded or rolled form.

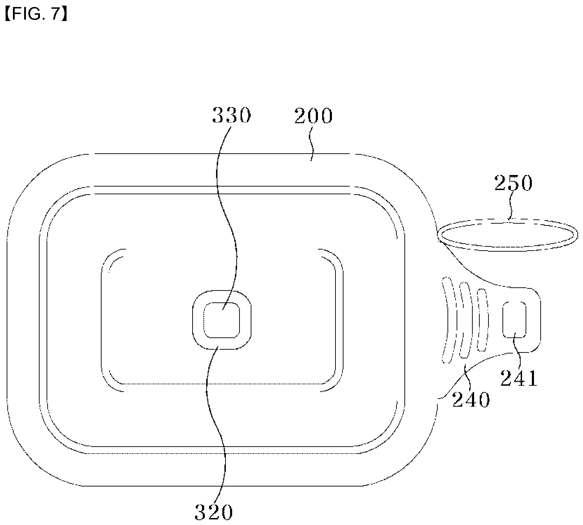

The ring 250 such as an elastic ring is formed at one end of one side of the container cap 200 and is preferably formed in a band form with elasticity. The ring 250 may be provided to fix the sealing container 10 in a folded or rolled form. For example, after use, the sealing container 10 is folded or rolled from the opposite side where the ring 250 is provided as shown in FIG. 7. Then, the fitting groove 241 formed at the handle 240 is primarily fixed to the fitting protrusion 330 formed on the check valve 300, and then the ring 250 is inserted from the outside to the inside for secondary fixing. In other words, the sealing container 10 folded or rolled into a scroll form is pressed by the elastic force of the ring 250 so as not to be released from external impact.

The discharge hole 260 is formed at a predetermined position (at the center in this embodiment) of the container cap 200 to discharge steam or gas generated inside the container cap 200 to the outside. The discharge hole may be formed at a location other than the center.

The check valve 300 is fitted and fixed into the discharge hole 260 and is provided to open or close the discharge hole 260 so that steam or gas generated in the sealing container 10 is kept at a constant steam pressure. The check valve 300 includes a coupling portion 310 fitted and fixed in the discharge hole 260, an opening plate 320 formed at an upper portion of the coupling portion 310 and closely adhered to an upper surface of the discharge hole 260 to seal the discharge hole 260, and a fitting protrusion 330 formed at an upper portion of the opening plate 320 and formed to be fitted into the fitting groove 241 formed at the handle 240.

The coupling portion 310 is formed at a bottom end of the opening plate 320 and may be formed in plural numbers spaced apart from each other in the circumferential direction. In addition, the coupling portion 310 includes a support 311 inserted into the discharge hole 260 to move upward or downward, and an adhering portion 312 formed at a bottom end of the support 311 and closely adhered to a bottom surface of the discharge hole 260 when the support 311 moves upwards to limit the movement of the support 311.

Meanwhile, a space 313 is formed between the coupling portion 310 and another coupling portion 310 adjacent thereto so that the plurality of coupling portions 310 generate elasticity. When the check valve 300 moves upward, a certain amount of steam or gas generated inside the sealing container 10 is allowed to be discharged to the outside through the space 313.

The opening plate 320 is positioned on the discharge hole 260 formed in the container cap 200 and is provided to seal or open the discharge hole 260 by the movement of the check valve 300. For example, if the check valve 300 is moved upward, the opening plate 320 is separated from the discharge hole 260 to expose the space 313 formed in the coupling portion 310 to the outside. At this time, the steam or gas generated inside the sealing container 10 is discharged to the outside through the space 313 exposed to the outside.

The fitting protrusion 330 is formed to be spaced apart from the upper surface of the opening plate 320, and a groove is formed between the opening plate 320 and the fitting protrusion 330 so that the inner surface of the fitting groove 241 formed at the handle 240 is fitted and fixed therein.

If the check valve 300 described above is installed at the center of the container cap 200 and used, when a pressure over a certain level is generated by the steam generated inside the sealing container 10, the sealing container 10 may explode. In order to prevent the explosion, in the present disclosure, the check valve 300 is installed.

That is, when a pressure over a certain level is generated inside the sealing container 10, the inside of the sealing container 10 expands and the check valve 300 moves upward. At this time, the steam inside the sealing container 10 is discharged to the outside by the check valve 300 moved upward.

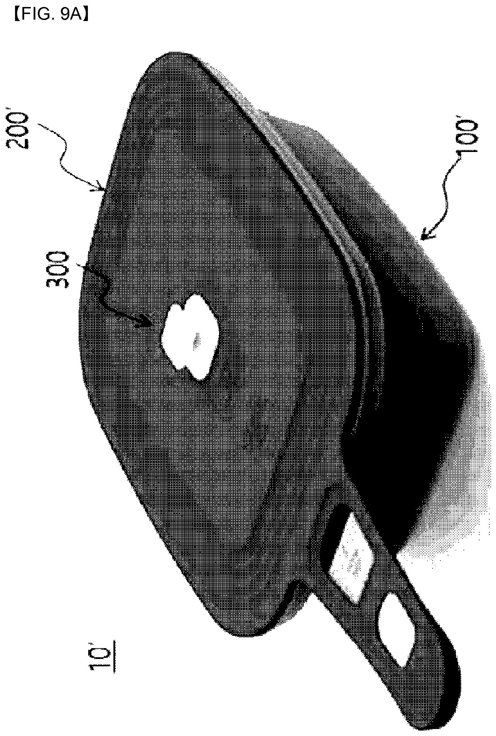

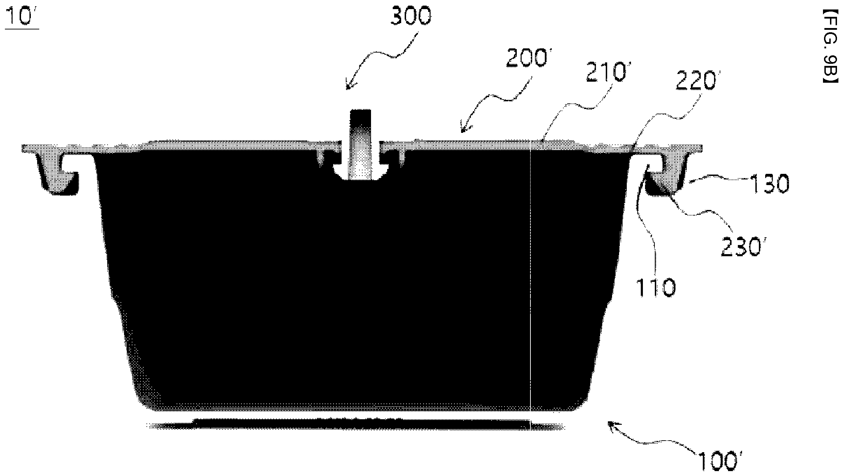

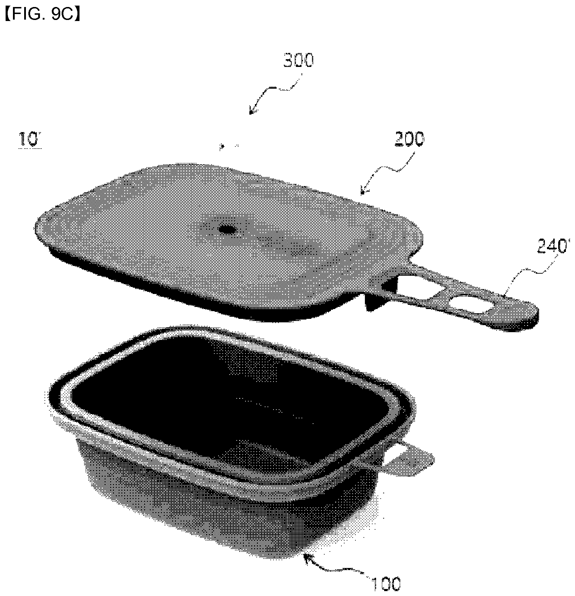

FIGS. 9a to 9c are diagrams showing a fastening manner of a container body and a container cap of the steam sealing container according to another embodiment of the present disclosure.

A container body 100' includes a first extension 110 formed to primarily extend outward in a horizontal direction along a rim of the sidewall of the container body 100' and having a flange shape, and a catching protrusion 120 bent downward from an end of the first extension 110 to secondarily extend so that the container cap 200 is fixed thereto.

A container body 100' includes a first extension 110 formed to primarily extend outward in a horizontal direction along the rim of the sidewall thereof and having a flange shape, and a container accommodation portion 130 formed to extend from the sidewall in a state of being spaced apart from a lower portion of the first extension 110. The container accommodation portion 130 extends horizontally from the outer side of the sidewall at the lower portion of the first extension 110 and is then bent upward. That is, the container accommodation portion 130 is formed to surround the first extension 110 on the top end of the sidewall of the container body 100' and forms an open top between the first extension 110 and the container accommodation portion 130.

Meanwhile, a container cap 200' includes a sealing portion 210' for covering the opening of the container body 100', a second extension 220', a fastening unit 230', and a handle 240'.

The fastening unit 230' is a structure having a hook shape extending downward from the bottom end of the second extension 220'. That is, in the process of coupling the container cap 200' onto the container body 100', the fastening unit 230' enters the inner space of the container accommodation portion 130, and in the state, the hook shape forming the bottom end of the fastening unit 230' is hooked to the bottom end of the first extension 110.

Meanwhile, the middle portion of the second extension 220' facing the top end of the first extension 110 of the container body 100' may be bent upward to form variously shapes such as a semicircular shape to form the accommodation portion in which the steam generated inside the container body 100' may be accommodated.

The fastening unit 230' may be accommodated and fastened in the container accommodation portion 130, and the fastening unit 230' and the container accommodation portion 130 may be elastically deformed to be coupled and separated. Other components except for fastening unit 230' and container accommodation portion 130 are identical to those of the steam sealing container according to the embodiment depicted in FIGS. 1 to 8 and thus will not described in detail here.

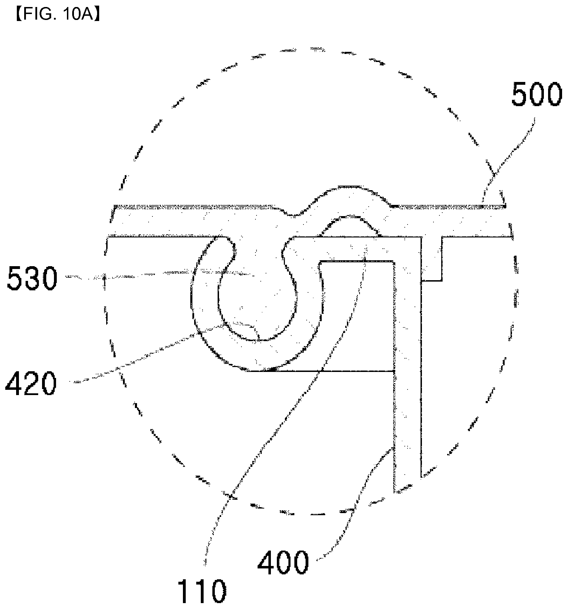

FIG. 10a is a diagram showing a fastening manner of the container body and the container cap of the steam sealing container according to another embodiment of the present disclosure. Referring to FIG. 10a, a container body 400 includes a coupling groove 420 formed at a predetermined position of the first extension 110, for example at an end thereof. The coupling groove 420 has an open top, and the top end opening is narrower than the inside thereof. A container cap 500 has a coupling protrusion 530 formed to protrude downward from the outer end of the second extension 220. The coupling protrusion is formed at a position corresponding to the coupling groove, for example at the end.

The coupling protrusion 530 is formed to be accommodated and fastened in the coupling groove 420, and the coupling groove 420 and the coupling protrusion 530 may be elastically deformed to be coupled and separated. Other components except for coupling groove 420 and the coupling protrusion 530 are identical to those of the steam sealing container according to the embodiment depicted in FIGS. 1 to 8 and thus will not described in detail here.

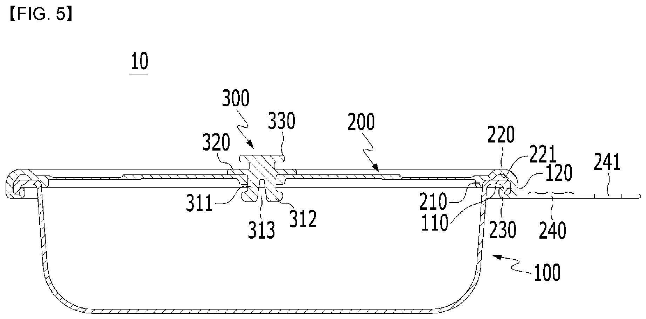

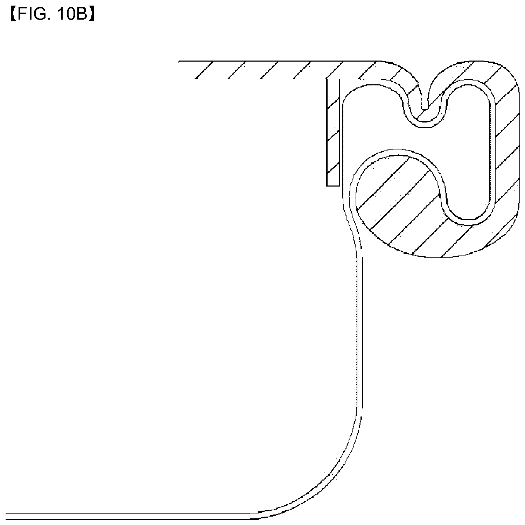

Also, in the embodiment of FIG. 10b, the fastening unit 230 depicted in FIG. 5 may be added. That is, the fastening unit 230 depicted in FIG. 5 may be formed at the end of the container cap 500 depicted in FIG. 10a to be fastened and fixed to surround the downwardly protruding portion.

In detail, as shown in FIG. 10b, the container cap further includes a separate fastening unit that is formed at the end of the second extension to surround the end of the first extension from the below and has a larger end size (surface area) than the thickness of the connection portion connected to the end, so that the container cap is not easily taken off in a state of being fastened.

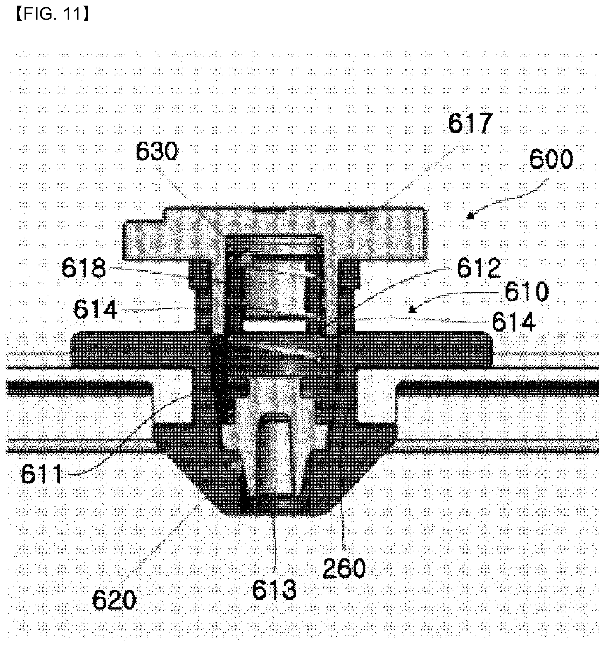

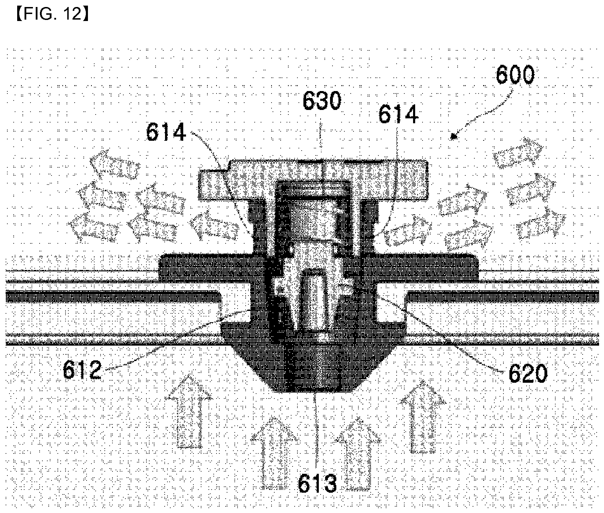

FIGS. 11 and 12 are diagrams showing a check valve of a steam sealing container according to still another embodiment of the present disclosure. Referring to FIGS. 11 and 12, a check valve 600 includes a valve body 610, a caulk 620 accommodated inside the valve body 610, and an elastic member 630 accommodated inside the valve body 610 to push the caulk 620.

The valve body 610 includes a coupling member 611 fitted into the discharge hole 260 formed in the container cap 200, and a stopper member 617 coupled to a top end of the coupling member 611.

The coupling member 611 is fitted into the discharge hole 260 of the container cap 200 to close the discharge hole 260. A valve space 612 is formed inside the coupling member 611. The coupling member 611 has an inner passage 613 for connecting the valve space 612 and the inner space of the container body 100, and an outer passage 614 for connecting the valve space 612 and the outside of the container cap 200. The valve space 612 accommodates the caulk 620 and the elastic member 630. The top end of the coupling member 611 is opened, and the open top end is closed by the stopper member 617.

The stopper member 617 is coupled to coupling member 611 to close the open top end of coupling member 611. The stopper member 617 has a protruding portion 618 formed to protrude so that the elastic member 630 is inserted thereto.

The caulk 620 is accommodated in the valve space 612 of the valve body 610 to close the inner passage 613 as shown in FIG. 11. The caulk 620 is movable in the valve space 612. If the caulk 620 is moved and located away from the inner passage 613 as shown in FIG. 12, the inner passage 613 is connected to the valve space 612, and the steam in the inner space of the container body 110 is discharged to the outside via the inner passage 613, the valve space 612 and the outer passage 614.

The elastic member 630 is accommodated in the valve space 612 of the valve body 610 to give an elastic force so that the caulk 620 keeps closing the inner passage 613. In this embodiment, the elastic member 630 is a compression coil spring, one end of which is fitted into the caulk 620 and the other end of which is fitted into the protruding portion 618 of the stopper member 617. The discharge pressure may be adjusted according to the elastic modulus of the elastic member 630.

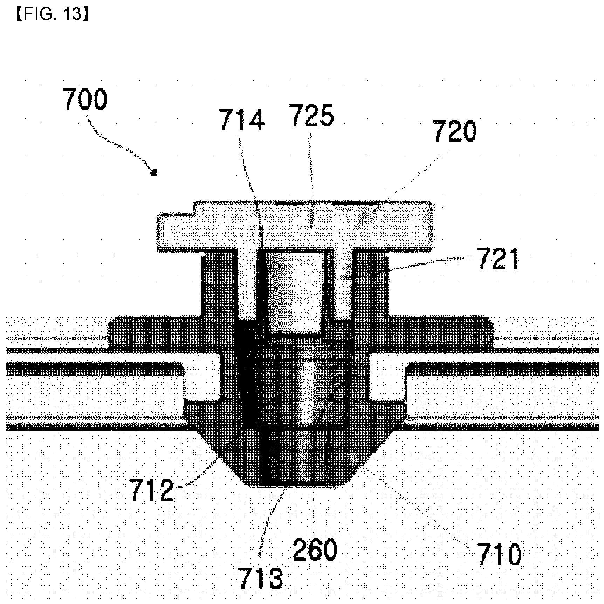

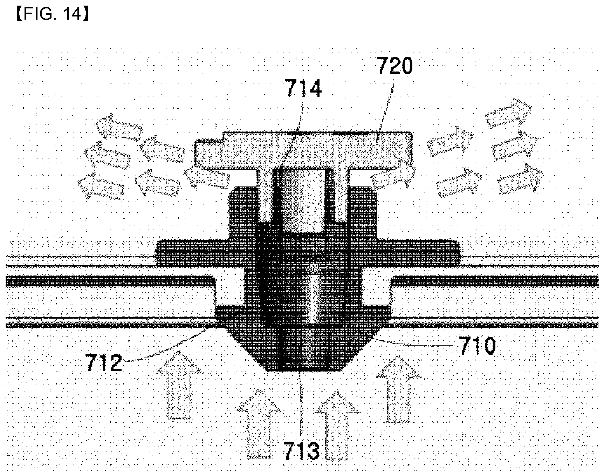

FIGS. 13 and 14 are diagrams showing a check valve of a steam sealing container according to still another embodiment of the present disclosure. Referring to FIGS. 13 and 14, a check valve 700 may include a valve body 710 and a valve cover 720 coupled to the valve body 710.

The valve body 710 is fitted into the discharge hole 260 of the container cap 200 to close the discharge hole 260. A valve space 712 is formed inside the valve body 710. The valve body 710 has an inner passage 713 for connecting the valve space 712 and the inner space of the container body 100 and an outer passage 714 for connecting the valve space 712 and the outside of the container space 200. The outer passage 714 is a passage formed by opening the top end of the valve space 712. The outer passage 714 is opened and closed by the valve cover 720.

The valve cover 720 is inserted into the open top end of the valve body 710 to be movably relative to the valve body 710 so as to open or close the outer passage 714 of the valve body 710. The valve cover 720 has an insert portion 721 inserted into the valve space 712 through the outer passage 714 that is the open top end of the valve body 710, and a cover plate 725 located at the top end of the insert portion 721 to cover the outer passage 714. If the cover plate 725 is in contact with the outer passage 714 as shown in FIG. 13, it is prevented to discharge steam through the outer passage 714. If the pressure in the inner space of the container body 100 increases so that the valve cover 720 is pushed up as shown in FIG. 14, the cover plate 725 is separated from the outer passage 714, and the steam inside the container body 100 is discharged to the outside through the outer passage 714. The discharge pressure may be adjusted according to the weight of the valve cover 720.

Although the present disclosure has been described through the above embodiments, the present disclosure is not limited thereto. The embodiments may be modified or changed without departing from the intend and scope of the present disclosure, and one of ordinary skill in the art will recognize that such modifications and changes fall within the present disclosure.

## Claims

1. A steam sealing container, comprising:
a container body having a first extension formed to extend outward along a rim of a sidewall thereof and a container accommodation portion formed to extend from the sidewall in a state of being spaced apart from the first extension downward; and
a container cap configured to cover an upper portion of the container body to seal an inside of the container body,
wherein the container cap includes:
a second extension closely adhered to a top surface of the first extension; and
a fastening unit formed to have a hook shape extending downward from a bottom end of the second extension,
wherein while the container cap is coupled onto the container body, the fastening unit enters an inner space of the container accommodation portion, and the hook shape forming a bottom end of the fastening unit is hooked to a bottom end of the first extension.

2. The steam sealing container according to claim 1,
wherein a middle portion of the second extension, which faces a top end of the first extension of the container body, is curved upward to have various shapes including a semicircular shape to form an accommodation portion serving as a space in which steam generated inside the container body is accommodated.

3. The steam sealing container according to claim 1,
wherein a discharge hole is formed in the container cap,
wherein the steam sealing container further comprises a check valve configured to open or close the discharge hole,
wherein the container cap is made of flexible material and further has a handle formed to extend outward at one side of the container cap,
wherein a fitting groove is formed at the handle so that the check valve is fitted therein,
wherein the check valve includes a coupling portion (310) fitted and fixed in the discharge hole, an opening plate (320) formed at an upper portion of the coupling portion and closely adhered to an upper surface of the discharge hole to seal the discharge hole, and a fitting protrusion (330) formed at an upper portion of the opening plate and fitted into the fitting groove formed at the handle.

4. The steam sealing container according to claim 1,
wherein a discharge hole is formed in the container cap,
wherein the steam sealing container further comprises a check valve configured to open or close the discharge hole,
wherein the check valve includes a valve body (610) fitted into the discharge hole to close the discharge hole and having a valve space (612) formed therein, a caulk (620) movably accommodated in the valve space, and an elastic member (630) accommodated in the valve space to give an elastic force to the caulk,
wherein the valve body has an inner passage (613) formed to connect the valve space and the inner space of the container body, and an outer passage (614) formed to connect the valve space and the outside of the container cap, and
wherein the elastic member gives an elastic force so that the caulk keeps closing the inner passage.

5. The steam sealing container according to claim 1,
wherein a discharge hole is formed in the container cap,
wherein the steam sealing container further comprises a check valve configured to open or close the discharge hole,
wherein the check valve includes a valve body (710) fitted into the discharge hole to close the discharge hole and having a valve space (712) formed therein with an open top end and an open bottom end, and a valve cover (720) movably inserted into the open top end of the valve body.
